# EUROPÄISCHE PATENTANMELDUNG

(11) **EP 4 733 580 A1**
(43) Veröffentlichungstag der Anmeldung: **29.04.2026**
(21) Anmeldenummer: 24208837.5
(22) Anmeldetag: 25.10.2024
(51) Int. Cl.: F03D 17/00, F03D 80/40

(54) **WINDENERGIEANLAGEN-ROTORBLATT**

(71) Anmelder: Wobben Properties GmbH, 26607 Aurich (DE)
(72) Erfinder: Daboul, Hussam, 26624 Südbrookmerland (DE); Mahmoud, Muhanad, 26605 Aurich (DE); Krebs, Sven, 26789 Leer (DE); Plenge, Leonhard, 26131 Oldenburg (DE)
(74) Vertreter: Eisenführ Speiser

(57) **Zusammenfassung**

Es wird ein Windenergieanlagen-Rotorblatt (200) vorgesehen. Das Rotorblatt weist eine erste und zweite Halbschale (210, 220) auf, welche zusammen eine Rotorblattwandung (200a) ausbilden, und mindestens einen Temperatursensor (400) in oder an der ersten und/oder zweiten Halbschale (210, 220), der geeignet ist, eine Temperatur der ersten und/oder zweiten Halbschalen (210, 220) zu erfassen. Der Temperatursensor (400) weist mindestens einen Lichtwellenleiter-Sensor (410) auf, welcher sich in oder an der ersten und/oder zweiten Halbschale (210, 220) erstreckt und dazu verwendet wird, eine Temperatur in oder an der ersten und/oder zweiten Rotorblatthalbschale (210, 220) zu erfassen, und einen Lichtwellenleiter-Detektor (420), welcher Messergebnisse des Lichtwellenleiter-Sensors (410) erfasst und auswertet.

## Beschreibung

Die vorliegende Erfindung betrifft ein Windenergieanlagen-Rotorblatt und ein Temperatur-Messverfahren.

Da die Rotorblätter einer Windenergieanlage ungeschützt allen Witterungsbedingungen ausgesetzt sind, kann es bei bestimmten Temperaturen zu einer Vereisung der Rotorblätter kommen. Um dies zu verhindern, kann eine Rotorblattheizung verwendet werden. Hierbei kann entweder eine Heizung außen am Rotorblatt vorgesehen werden oder erwärmte Luft kann in das Rotorblatt geleitet werden.

Zur Vermeidung der Vereisung der Rotorblätter wird oftmals eine Rotorblattheizung verwendet. Hierbei wird typischerweise erwärmte Luft im Bereich der Rotorblattwurzel in das Innere des Rotorblattes eingeleitet. Die erwärmte Luft erwärmt wiederum die Rotorblattschale, beispielsweise im Bereich der Rotorblattnase, so dass eine Enteisung des Rotorblattes erreicht werden kann.

WO 2017/021350 A1 zeigt ein Windenergieanlagen-Rotorblatt mit einem Rotorblattwurzelbereich und einem Rotorblattspitzenbereich und einer Rotorblatt-Heizung. Ferner ist mindestens ein Steg entlang einer Längsrichtung des Rotorblattes vorgesehen. An dem Steg kann eine Umlenkeinheit zum Umlenken der Luft vorgesehen werden.

Daher ist es eine Aufgabe der vorliegenden Erfindung, ein Windenergieanlagen-Rotorblatt mit einer verbesserten Rotorblattbeheizung vorzusehen und insbesondere eine effizientere Rotorblattheizung vorzusehen.

Diese Aufgabe wird durch ein Windenergieanlagen-Rotorblatt nach Anspruch 1 und durch ein Temperatur-Messverfahren für ein Windenergieanlagen-Rotorblatt nach Anspruch 7 gelöst.

Somit wird ein Windenergieanlagen-Rotorblatt vorgesehen. Das Rotorblatt weist eine erste und zweite Halbschale, welche zusammen eine Rotorblattwandung ausbilden, und mindestens einen Temperatursensor in oder an der ersten und/oder zweiten Halbschale, der geeignet ist, eine Temperatur der ersten und/oder zweiten Halbschalen zu erfassen, auf. Der Temperatursensor weist mindestens einen Lichtwellenleiter-Sensor auf, welcher sich in oder an der ersten und/oder zweiten Halbschale erstreckt und dazu verwendet wird, eine Temperatur in oder an der ersten und/oder zweiten Rotorblatthalbschale zu erfassen, und einen Lichtwellenleiter-Detektor auf, welcher Messergebnisse des Lichtwellenleiter-Sensors erfasst und auswertet.

Durch die Verwendung von Lichtwellenleitern (welche elektrisch nicht leitend sind) zur Temperaturmessung kann ein negativer Einfluss des Temperatur-Sensors auf den Blitzschutz vermieden werden.

Optional ist der Lichtwellenleiter-Detektor dazu ausgestaltet, Licht in den Lichtwellenleiter-Sensor zu emittieren und von dem Lichtwellenleiter-Sensor reflektiertes Licht zu erfassen und zu analysieren, um aus dem reflektierten Licht Temperaturwerte zu ermitteln. Damit kann eine einfache und robuste Temperaturmessung ermöglicht werden.

Optional ist der Lichtwellenleiter-Detektor dazu ausgestaltet ist, das von dem Lichtwellenleiter-Sensor reflektierte Licht zu analysieren, um aus dem reflektierten Licht basierend auf einer Raman-Analyse Temperaturwerte zu ermitteln.

Bei Raman-basierter Temperaturmessung wird die Temperaturmessung durch das Raman-Streuung-Prinzip ermöglicht. Wenn Licht durch einen Lichtwellenleiter geleitet wird, interagiert es mit den Molekülen des Lichtwellenleiters, was zu einer Änderung der Frequenz des gestreuten Lichts führt. Diese Frequenzänderung ist temperaturabhängig.

Durch Analyse des rückgestreuten Lichts kann die Temperatur entlang des Lichtwellenleiter gemessen werden. Diese Methode ist besonders für die Temperaturmessung über lange Strecken geeignet.

Optional wird die erste und/oder zweite Halbschale aus einem Faserverbund-Material, insbesondere GFK oder CFK, hergestellt. Der Lichtwellenleiter-Sensor weist Lichtwellenleiter in Form von Glasfaserleiter auf, welche in das Faserverbund-Material der ersten und/oder zweiten Halbschale eingebettet sind, um eine Temperatur des Faserverbund-Materials zu erfassen. Da sowohl das Material der Halbschalen als auch das Material des Lichtwellenleiters Fasermarerial darstellen, weisen sie ähnliche Wärmeausdehnungskoeffizienten auf.

Optional weist das Windenergieanlagen-Rotorblatt eine Rotorblattheizung auf, welche dazu ausgestaltet ist, eine Beheizung des Rotorblattes in Abhängigkeit der TemperaturAnalyse des Lichtwellenleiter-Detektors zu aktiveren.

Optional weist der Lichtwellenleiter-Sensor mindestens einen Lichtwellenweiter auf, der als gerader Lichtwellenleiter, als gewundener Lichtwellenleiter oder als eine Kombination von beiden ausgestaltet ist.

Die Erfindung betrifft ebenfalls ein Verfahren zum Messen einer Temperatur eines Windenergieanlagen-Rotorblattes mittels mindestens eines Temperatursensors in oder an einer ersten und/oder zweiten Halbschale des Windenergieanlagen-Rotorblattes, der eine Temperatur der ersten und/oder zweiten Halbschalen erfassen kann. Der Temperatursensor weist mindestens einen Lichtwellenleiter-Sensor, welcher sich in oder an der ersten und/oder zweiten Halbschale erstreckt und dazu verwendet wird, eine Temperatur in oder an der ersten und/oder zweiten Rotorblatthalbschale zu erfassen, und einen Lichtwellenleiter-Detektor auf. Licht wird von dem Lichtwellenleiter-Detektor in den Lichtwellenleiter-Sensor emittiert. Der Lichtwellenleiter-Detektor erfasst das durch den Lichtwellenleiter-Sensor reflektierte Lichts und analysiert das erfasste reflektierte Licht, um aus dem reflektierten Licht Temperaturwerte zu ermitteln.

Eine Rotorblattheizung wird typischerweise so ausgelegt, dass die Eisbildung auf der Aussenflache des Rotorblattes (vollständig oder teilweise) verhindert oder reduziert wird. Die Rotorblattheizung wird anhand thermischer CFD berechnet und optimiert. Damit die Berechnungen und das Konzept validiert werden, werden Messdaten benötigt. Dies erfolgt im Stand der Technik durch punktuelle Messung (z.B. mittels eines Temperaturwiderstandes) oder durch Oberflächenmessung, z.B. Thermographie. Die Thermographie kann im Einsatz bei Windenergieanlagen Beschränkungen aufweisen, wie z.B. Wetterabhängigkeit oder auch eine beschränkte Genauigkeit.

Um die Temperaturmessung bei einem Rotorblatt zu verbessern, wird vorliegend vorgeschlagen, Glasfaserkabel oder - leiter bzw. Lichtwellenleiter auf die Innenseite oder mitten im Material oder an der Außenseite des Rotorblatts zu verlegen. Ein Detektor kann das Signal aus der Glasfaser (d.h. das reflektierte Licht) z.B. nach Raman-Effekt auswerten und die Temperatur entlang des Glasfaserkabels berechnen.

Die Verwendung von Lichtwellenleitern als Temperatursensoren im Rotorblatt ist vorteilhaft, da wegen Sicherheitsaspekten im Hinblick auf den Blitzschutz herkömmliche Sensoren (z.B. PT100) mit metallischem Signalleiter nicht verwendet werden sollten. Eine Glasfaser oder ein Lichtwellenleiter wird am oder im Rotorblatt verlegt. Eine Auswerte-Einheit (Detektor) kann optional über einen Raman-Effekt das Signal der Glasfaser als Temperatur interpretieren und damit das Glasfaser als kontinuierlicher Temperatursensor verwenden. Weil das Glasfaser direkt an die Außenoberflache oder unter der letzten Lage verlegt werden kann (da es nicht metallisch ist), können dadurch exakte Rückschlüsse auf eine Eisbildung am Rotorblatt gemacht werden.

Mit dem Lichtwellenleiter-Temperatursensor kann eine Temperaturmessung entlang des Rotorblatts erreicht werden. Der Lichtwellenleiter kann auf der Innenseite, der Außenseite oder im Rotorblattmaterial verlegt werden. Der Lichtwellenleiter kann gerade, in Schleifen oder gemischt (gerade und in definierten Abstanden in Schleifen) verlegt werden. Die Schleifen können verwendet werden, um die örtliche Auflösung des Glasfaserkabels zu erhöhen oder um Schäden am Kabel durch die Biegung des Rotorblatts zu vermeiden.

Optional kann ein Kanal (Verlegekanal) bei der Fertigung des Rotorblatts vorgesehen werden, so dass das Kabel im Kanal im Nachhinein verlegt werden kann.

Glasfaser, Glasfaserkabel, Glasfaserleiter und Lichtwellenleiter sind als Synonyme zu verstehen.

Weitere Ausgestaltungen der Erfindung sind Gegenstand der Unteransprüche.

Vorteile und Ausführungsbeispiele der Erfindung werden nachstehend unter Bezugnahme auf die Zeichnung näher erläutert.
- Fig. 1: zeigt eine schematische Darstellung einer Windenergieanlage gemäß der Erfindung,
- Fig. 2A und 2B: zeigen einen schematischen Querschnitt und einen schematischen Längsschnitt eines Rotorblattes,
- Fig. 3: zeigt einen schematischen Querschnitt eines Rotorblattes, und
- Fig. 4: zeigt verschiedene Formen eines Lichtwellenleiter-Sensors.

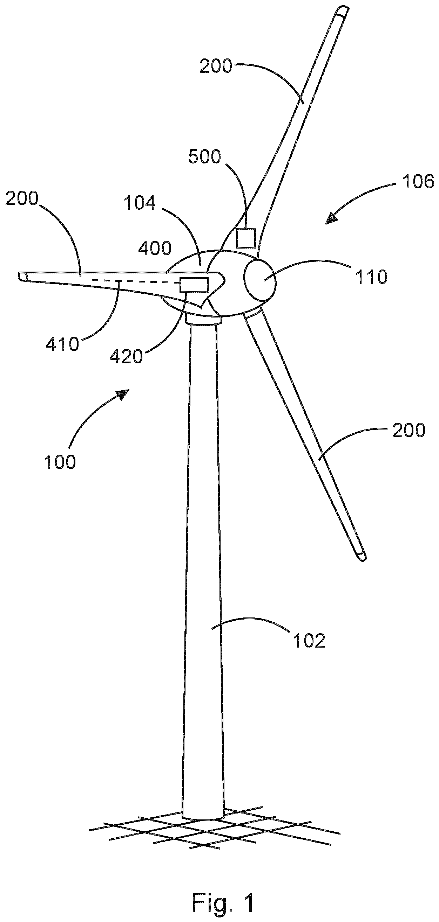

Fig. 1 zeigt eine schematische Darstellung einer Windenergieanlage gemäß der Erfindung. Die Windenergieanlage 100 weist einen Turm 102 und eine Gondel 104 auf dem Turm 102 auf. An der Gondel 104 ist ein aerodynamischer Rotor 106 mit drei Rotorblättern 200 und einem Spinner 110 vorgesehen. Der aerodynamische Rotor 106 wird im Betrieb der Windenergieanlage durch den Wind in eine Drehbewegung versetzt und dreht somit auch einen Rotor oder Läufer eines Generators, welcher direkt oder indirekt mit dem aerodynamischen Rotor 106 gekoppelt ist. Der elektrische Generator ist in der Gondel 104 angeordnet und erzeugt elektrische Energie. Die Pitchwinkel der Rotorblätter 200 können durch Pitchmotoren an den Rotorblattwurzeln der jeweiligen Rotorblätter 200 verändert werden.

Zur Rotorblattenteisung kann eine Rotorblattheizung 500 im Bereich einer Rotorblattwurzel vorgesehen sein. Alternativ dazu kann die Rotorblattheizung 500 im Bereich einer Rotornabe oder an einem Rotorblattanschluss vorgesehen sein. Die Rotorblattheizung 500 erzeugt warme Luft und leitet sie dann in das Innere des Rotorblattes zur Enteisung des Rotorblattes oder zur Vorbeugung einer Vereisung weiter.

Die Windenergieanlage 100 weist einen Temperatursensor 400 auf, der mindestens einen Lichtwellenleiter-Sensor 410 und einen Lichtwellenleiter-Detektor 420 aufweist. Der Lichtwellenleiter-Sensor 410 kann mindestens einen Lichtwellenleiter aufweisen, der in oder an einer Rotorblattwandung vorgesehen ist und die Temperatur der Rotorblattwandung erfasst.

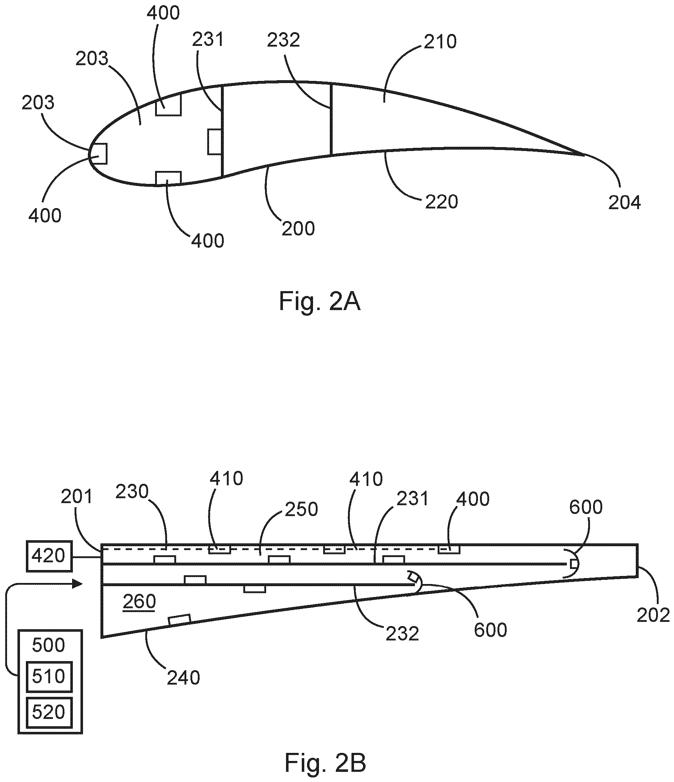

Fig. 2A zeigt einen Querschnitt eines Rotorblattes und Fig. 2B zeigt einen Längsschnitt eines Rotorblattes. Das Rotorblatt 200 weist zwei Blatthalbschalen 210, 220 auf, welche zusammen eine Rotorblattwandlung ausbilden. Das Rotorblatt 200 weist ferner eine Rotorblattvorderkante 230 und eine Rotorblatthinterkante 204 auf. Zwischen den Blattschalen 210, 220 können Stege 231, 232 vorgesehen sein, so dass in verschiedene Abschnitte oder Kanäle aufgeteilt werden kann.

Optional können Umlenkbögen 600 am freien Ende der Stege vorgesehen sein.

Die Rotorblattheizung 500 kann im Bereich der Rotorblattwurzel 201 oder im Bereich einer Rotornabe vorgesehen sein. Die Rotorblattheizung 500 kann einen Lüfter 510 und eine Heizeinheit 520 aufweisen.

Das Rotorblatt 200 weist einen Temperatursensor 400 auf, der mindestens einen Lichtwellenleiter-Sensor 410 und einen Lichtwellenleiter-Detektor 420 aufweist. Der Lichtwellenleiter-Sensor 410 kann mindestens einen Lichtwellenleiter aufweisen, der in oder an einer Rotorblattwandung vorgesehen ist und die Temperatur der Rotorblattwandung erfasst. Die Messergebnisse des Lichtwellenleiter-Sensors 410 werden durch den Lichtwellenleiter-Detektor 420 erfasst und ausgewertet, um eine gemessene Temperatur zu ermitteln. Diese Temperatur entspricht dann einer Temperatur der Rotorblattwandung.

Somit lässt sich die Temperatur des Rotorblattes erfassen. Da der Lichtwellenleiter-Sensor Lichtwellenleiter, welche nicht leitend sind, aufweist, wird ein Blitzschutzsystem des Rotorblattes nicht beeinträchtigt.

Die Temperaturmessung mit Lichtwellenleiter oder Glasfasern in dem Temperatur-Sensor basiert auf der Nutzung von Lichtwellenleitern, die empfindlich auf Temperaturänderungen reagieren. Beispielsweise können hierbei die Raman-, Brillouin- und Faser-Bragg-Gitter-Technologie verwendet werden.

Bei Raman-basierter Temperaturmessung wird die Temperaturmessung durch das Raman-Streuung-Prinzip ermöglicht. Wenn Licht durch einen Lichtwellenleiter geleitet wird, interagiert es mit den Molekülen des Lichtwellenleiters, was zu einer Änderung der Frequenz des gestreuten Lichts führt. Diese Frequenzänderung ist temperaturabhängig. Durch Analyse des rückgestreuten Lichts kann die Temperatur entlang des Lichtwellenleiter gemessen werden. Diese Methode ist besonders für die Temperaturmessung über lange Strecken geeignet.

Bei der Brillouin-basierten Temperaturmessung wird eine Brillouin-Streuung verwendet, bei der Lichtwellen mit akustischen Phononen in der Faser interagieren. Die Frequenzverschiebung des rückgestreuten Lichts hängt sowohl von der Temperatur als auch von der Dehnung der Faser ab. Durch eine getrennte Analyse der beiden Effekte können sowohl Temperatur als auch mechanische Belastungen gemessen werden.

Bei einer Faser-Bragg-Gitter basierten Temperaturmessung werden die Faser-Bragg-Gitter berücksichtigt. Hierbei handelt es sich um periodische Strukturen, die in die Lichtwellenleiter eingeätzt werden. Wenn Licht durch die Faser geleitet wird, wird eine spezifische Wellenlänge des Lichts durch das Bragg-Gitter reflektiert. Die reflektierte Wellenlänge verschiebt sich, wenn sich die Temperatur oder die mechanische Spannung ändert. Diese Methode ist sehr präzise und kann für punktuelle Temperaturmessungen verwendet werden.

Bei einer verteilten Temperaturmessung kann insbesondere die Raman- und Brillouin-Methode eine Messung der Temperatur über große Strecken hinweg ermöglichen, was in der Überwachung von Rotorblättern nützlich ist.

Vorteilhaft ist, dass die Lichtwellenleiter-Sensoren unempfindlich gegenüber elektromagnetischen Störungen sind und daher in rauen Umgebungen eingesetzt werden können.

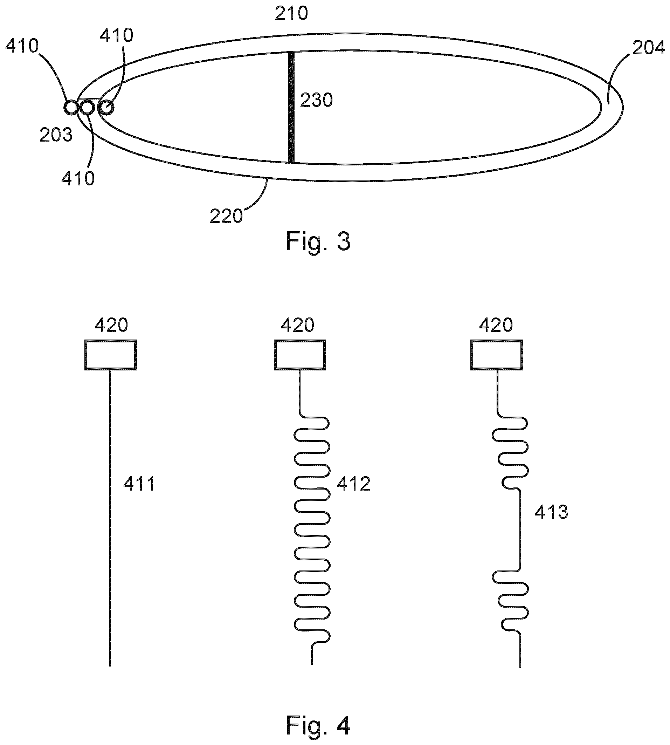

Fig. 3 zeigt einen schematischen Querschnitt eines Rotorblattes. Das Rotorblatt 200 weist zwei Halbschalen 210, 220 mit einer Vorderkante 203 und einer Hinterkante 204 auf. Beispielsweis im Bereich der Vorderkante 203 können Lichtwellenleiter-Sensoren 410 vorgesehen sein. Diese Sensoren dienen der Temperaturmessung.

Fig. 4 zeigt verschiedene Formen eines Lichtwellenleiter-Sensors. Insbesondere sind verschiedene Verlegemethoden der Lichtwellenleiter dargestellt. Durch die unterschiedlichen Verlegemethoden kann örtlich eine höhere Temperaturauflösung erhalten werden. Der Lichtwellenleiter-Sensor weist mindestens einen Lichtwellenleiter 411, 412, 413 auf. Der Lichtwellenleiter kann als gerader Lichtwellenleiter 411, als gewundener Lichtwellenleiter 412 oder als eine Kombination 413 von beiden ausgestaltet sein.

### Bezugszeichenliste

- 100: Windenergieanlage
- 102: Turm
- 104: Gondel
- 106: Rotor
- 110: Spinner
- 200: Rotorblätter
- 200a: Rotorblatt-Wandung
- 201: Rotorblattwurzel
- 202: Rotorblattspitze
- 203: Rotorblattvorderkante
- 204: Rotorblatthinterkante
- 205: Druckseite
- 206: Saugseite
- 210: erste Blattschale
- 220: zweite Blattschale
- 230: Stege
- 231: erster Steg
- 232: zweiter Steg
- 400: Temperatursensor
- 410: Lichtwellenleiter-Sensor
- 411: erster Lichtwellenleiter
- 412: zweiter Lichtwellenleiter
- 413: dritter Lichtwellenleiter
- 420: Lichtwellenleiter-Detektor
- 500: Rotorblattheizung
- 510: Lüfter
- 520: Heizeinheit

## Patentansprüche

1. Windenergieanlagen-Rotorblatt (200), mit
einer ersten und zweiten Halbschale (210, 220), welche zusammen eine Rotorblattwandung (200a) ausbilden,
mindestens einem Temperatursensor (400) in oder an der ersten und/oder zweiten Halbschale (210, 220), der geeignet ist, eine Temperatur der ersten und/oder zweiten Halbschale (210, 220) zu erfassen,
wobei der Temperatursensor (400) mindestens einen Lichtwellenleiter-Sensor (410) aufweist, welcher sich in oder an der ersten und/oder zweiten Halbschale (210, 220) erstreckt und dazu verwendet wird, eine Temperatur in oder an der ersten und/oder zweiten Rotorblatthalbschale (210, 220) zu erfassen, und einen Lichtwellenleiter-Detektor (420) aufweist, welcher Messergebnisse des Lichtwellenleiter-Sensors (410) erfasst und auswertet.

2. Windenergieanlagen-Rotorblatt (200) nach Anspruch 1, wobei
der Lichtwellenleiter-Detektor (420) dazu ausgestaltet ist, Licht in den Lichtwellenleiter-Sensor (410) zu emittieren und von dem Lichtwellenleiter-Sensor (410) reflektiertes Licht zu erfassen und zu analysieren, um aus dem reflektierten Licht Temperaturwerte zu ermitteln.

3. Windenergieanlagen-Rotorblatt (200) nach Anspruch 2, wobei
der Lichtwellenleiter-Detektor (420) dazu ausgestaltet ist, das von dem Lichtwellenleiter-Sensor (410) reflektierte Licht zu analysieren, um aus dem reflektierten Licht basierend auf einer Raman-Analyse Temperaturwerte zu ermitteln.

4. Windenergieanlagen-Rotorblatt (200) nach Anspruch 1, 2 oder 3, wobei
die erste und/oder zweite Halbschale (210, 220) aus einem Faserverbund-Material, insbesondere GFK oder CFK, hergestellt ist,
wobei der Lichtwellenleiter-Sensor (410) Lichtwellenleiter in Form von Glasfaserleiter (411, 412, 413) aufweist, welche in das Faserverbund-Material der ersten und/oder zweiten Halbschale (210, 220) eingebettet sind, um eine Temperatur des Faserverbund-Materials zu erfassen.

5. Windenergieanlagen-Rotorblatt (200) nach einem der Ansprüche 1 bis 3, ferner mit
einer Rotorblattheizung (500), welche dazu ausgestaltet ist, eine Beheizung des Rotorblattes (200) in Abhängigkeit der Temperaturanalyse des Lichtwellenleiter-Detektors (420) zu aktiveren.

6. Windenergieanlagen-Rotorblatt (200) nach einem der Ansprüche 1 bis 5, wobei
der Lichtwellenleiter-Sensor (410) mindestens einen Lichtwellenweiter (411, 412, 413) aufweist, der als gerader Lichtwellenleiter (411), als gewundener Lichtwellenleiter (412) oder als eine Kombination (413) von beiden ausgestaltet ist.

7. Verfahren zum Messen einer Temperatur eines Windenergieanlagen-Rotorblattes (200) mittels mindestens eines Temperatursensors (400) in oder an einer ersten und/oder zweiten Halbschale (210, 220) des Windenergieanlagen-Rotorblattes (200), der eine Temperatur der ersten und/oder zweiten Halbschalen (210, 220) erfassen kann, wobei der Temperatursensor (400) mindestens einen Lichtwellenleiter-Sensor (410), welcher sich in oder an der ersten und/oder zweiten Halbschale (210, 220) erstreckt und dazu verwendet wird, eine Temperatur in oder an der ersten und/oder zweiten Rotorblatthalbschale (210, 220) zu erfassen, und einen Lichtwellenleiter-Detektor (420) aufweist, mit den Schritten:
Emittieren von Licht in den Lichtwellenleiter-Sensor (410) durch den Lichtwellenleiter-Detektor (420),
Erfassen von durch den Lichtwellenleiter-Sensor (410) reflektierten Lichts, und
Analysieren des erfassten reflektierten Lichts, um aus dem reflektierten Licht Temperaturwerte zu ermitteln.
